# EUROPÄISCHE PATENTSCHRIFT

(11) **EP 4 139 318 B1**
(45) Veröffentlichungstag und Bekanntmachung des Hinweises auf die Patenterteilung: **22.05.2024**
(21) Anmeldenummer: 20721539.3
(22) Anmeldetag: 23.04.2020
(51) Int. Cl.: C07F 7/12, C07F 9/54

(54) **VERFAHREN ZUR DEHYDRIERUNG UND METHYLIERUNG VON SILANEN MIT METHYLCHLORID**
METHOD FOR THE DEHYDROGENATION AND METHYLATION OF SILANES WITH METHYL CHLORIDE
PROCÉDÉ DE DÉSHYDROGÉNATION ET DE MÉTHYLATION DE SILANES PAR DU CHLORURE DE MÉTHYLE

(43) Veröffentlichungstag der Anmeldung: 01.03.2023
(73) Patentinhaber: Wacker Chemie AG, 81737 München (DE)
(72) Erfinder: TILLMANN, Jan, 80636 München (DE); WEIDNER, Richard, 84489 Burghausen (DE)
(74) Vertreter: Mai, Marit
(86) Internationale Anmeldenummer: PCT/EP2020/061367
(87) Internationale Veröffentlichungsnummer: WO 2021/213661

(56) Entgegenhaltungen:
- WO-A1-2020/048597
- US-A1- 2002 082 438

## Beschreibung

Die vorliegende Erfindung bezieht sich auf ein Verfahren zur Dehydrierung und Methylierung von Silanen in Gegenwart mindestens eines Ammonium- und/oder Phosphoniumsalzes mit Methylchlorid (MeCl) bei einer Temperatur im Bereich von 70 - 350 °C.

Methylchlorsilane (MCS) finden z.B. in der Herstellung von Siliconen, zur Hydrophobierung und in der organischen Synthese Anwendung.

Der einzige Weg, effizient großtechnisch Me-Si Bindungen aufzubauen, ist der Müller-Rochow-Prozess. Der Müller-Rochow-Prozess geht von elementarem Silicium und einfachen chlororganischen Verbindungen wie MeCl aus.

Der Müller-Rochow-Prozess ermöglicht jedoch keine Umwandlung von Methyl-H-Silanen oder H-Silanen in methylierte und höher methylierte Methylchlorsilane (MCS).

Aus der Literatur sind Verfahren zur Chlorid-katalysierten Dehydrierung von H-haltigen Silanen bekannt:
US2002/0082438 A1 beschreibt die Synthese von Organochlorsilanen ausgehend von Trichlorsilan, Dichlorsilan oder Dichlormethylsilan. Als weiterer Ausgangsstoff wird ein halogenierter Kohlenwasserstoff der Formel R²R³CHX eingesetzt, mit X = Cl oder Br und R² ist ausgewählt aus (C₁₋₁₇)-Alkyl, (C₁₋₁₀)-fluoriertes Alkyl mit teilweiser oder vollständiger Fluorierung, (C₁₋₅)-Alkenyl, (CH₂)ₙSiMe₃₋ₘClₘ (mit n = 0-2 und m = 0-3), (CH₂)ₚX (mit p = 1-9 und X = Cl oder Br), oder ArCH₂X (mit Ar = aromatischer (C₆₋₁₄)-Kohlenwasserstoff und X = Cl oder Br), und R³ ist ausgewählt aus H, (C₁₋₆)-Alkyl, Ar(R')_{q} (mit Ar = aromatischer (C₆₋₁₄)-Kohlenwasserstoff, R = (C₁₋₄)-Alkyl, Halogen, Alkoxy oder Vinyl, q = 0-5). Als Katalysatoren werden unterschiedliche quartäre Phosphoniumhalogenide eingesetzt. Als Reaktionsmechanismus wird eine Dehydrochlorierung angenommen, bei allen Reaktionen wird Chlorwasserstoff abgespalten.

WO2020/048597 A1 offenbart die Reaktion von Dichlorsilan mit (i) Halogenwasserstoff oder (ii) halogenierten Kohlenwasserstoffen der Formel (I), wobei auch Methylchlorid umfasst ist. Es ist daher die Aufgabe der vorliegenden Erfindung, ein Verfahren bereitzustellen, mit dem wirtschaftlich Methylchlorsilane aus H-haltigen Silanen hergestellt werden können. Gelöst wird diese Aufgabe durch ein Verfahren zur Dehydrierung und Methylierung von Silanen, wobei Methylchlorid mit einem Silan ausgewählt aus der Gruppe bestehend aus SiH₄, H₂SiMe₂, H₂SiMeCl, H₃SiMe, H₃SiCl und HSiMe₂Cl in Gegenwart mindestens eines Ammonium- und/oder Phosphoniumsalzes bei einer Temperatur im Bereich von 70 - 350 °C umgesetzt wird.

Bei dem erfindungsgemäßen Verfahren wird Methylchlorid (MeCl) mit einem Silan ausgewählt aus der Gruppe bestehend aus SiH₄, H₂SiMe₂, H₂SiMeCl, H₃SiMe, H₃SiCl und HSiMe₂Cl in Gegenwart mindestens eines Ammonium- und/oder Phosphoniumsalzes als Katalysator umgesetzt.

In einem ersten Reaktionsschritt wird zunächst unter Wasserstoffabspaltung aus dem Silan ein nicht isolierbares Intermediat gebildet. Dieses Anion kann entweder unter formaler nucleophiler Substitution weiterreagieren, oder es kann als Silylen insertieren. Bei der Reaktion mit MeCl ist das Produkt immer ein Silan mit je einer zusätzlichen Methyl- und Cl-Funktion. In beiden Fällen wird wieder ein Chloridion frei, das dann wiederum als Katalysator zur Verfügung steht.

Im erfindungsgemäßen Verfahren wird als Katalysator mindestens ein Ammonium- und/oder Phosphoniumsalz eingesetzt. Das Ammonium- und/oder Phosphoniumsalz kann dabei auch in immobilisierter Form, z.B. auf einem Silikonharz, auf Silica, auf einem anorganischen Träger oder auf einem organischen Polymer, eingesetzt werden. Das Ammonium- und/oder Phosphoniumsalz kann auch in situ aus einem Amin oder Phosphin und HCl gebildet werden.

Bevorzugt wird das Ammonium- und/oder Phosphoniumsalz ausgewählt aus der Gruppe bestehend aus quartären Ammoniumhalogeniden [R₄N]X, quartären Phosphoniumhalogeniden [R₄P]X und tertiären Ammoniumhalogeniden [R₃NH]X, wobei jeweils gilt:
X = Cl, Br oder I, wobei Cl oder Br bevorzugt ist, und
R = unabhängig voneinander ausgewählt aus der Gruppe bestehend aus (i) C₁-C₁₂-Alkylgruppe, (ii) mit C₁-C₆-Alkyl substituierte C₆-C₁₄-Arylgruppe, und (iii) Phenylgruppe, wobei Ethyl, n-Butyl, und Phenyl bevorzugt sind.

Besonders bevorzugte Beispiele solcher Verbindungen sind [n-Bu₄N]Cl, [Et₄N]Cl, [Ph₄P]Cl und [n-Bu₄P]Cl.

Das erfindungsgemäße Verfahren wird üblicherweise bei einer Temperatur im Bereich von 70 - 350 °C durchgeführt, je nach Temperaturbeständigkeit des Katalysators. Die Temperatur liegt bevorzugt in einem Bereich von 100 - 350 °C. Für [*n*-Bu₄N]Cl, [Et₄N]Cl und [*n*-Bu₄P]Cl liegt die Temperatur besonders bevorzugt in einem Bereich von 100 - 180 °C, ganz besonders bevorzugt liegt die Temperatur in einem Bereich von 150 - 180 °C, am meisten bevorzugt ist eine Temperatur in einem Bereich von 170 - 180 °C. Für [Ph₄P]Cl liegt die Temperatur besonders bevorzugt in einem Bereich von 70 - 350 °C, ganz besonders bevorzugt in einem Bereich von 250 - 350 °C.

Das molare Verhältnis von Silan zu MeCl kann vom Fachmann frei gewählt werden. Üblicherweise liegt das molare Verhältnis in einem Bereich von 1:1 bis 1:10. Bei allen Silanen der Gruppe bis auf SiH₄ entspricht die Menge an zugesetztem MeCl vorzugsweise mindestens der stöchiometrischen Menge an umzuwandelndem Silan, das molare Verhältnis beträgt also vorzugsweise 1:1 bis 1:2. Bei SiH₄ entspricht die Menge an zugesetztem MeCl vorzugsweise mindestens der zweifachen Menge, das molare Verhältnis beträgt also vorzugsweise 1:2 bis 1:4.

Das molare Verhältnis von Katalysator zu Silan kann vom Fachmann frei gewählt werden. Bevorzugt liegt das molare Verhältnis in einem Bereich von 0,01 : 1 bis 0,2 : 1.

Mit dem erfindungsgemäßen Verfahren zur Dehydrierung von Silan können auf wirtschaftliche Weise Methylchlorsilane hergestellt werden.

### Beispiele

GC-Messungen wurden mit einem Agilent 6890N durchgeführt (WLD-Detektor; Säulen: HP5 von Agilent: Länge: 30 m/ Durchmesser: 0,32 mm/ Filmdicke: 0,25 µm; RTX-200 von Restek: Länge: 60 m/ Durchmesser: 0,32 mm/ Filmdicke: 1 pm). Retentionszeiten wurden mit den kommerziell erhältlichen Substanzen abgeglichen, alle Chemikalien wurden verwendet wie gekauft. MS-Messungen wurden mit einem ThermoStar^{™} GSD 320 T2 mit Iridiumkathode durchgeführt.

### Beispiel 1: Reaktionen von SiH₄ mit MeCl

Ein Autoklav wurde mit SiH₄ (9 g; 0,50 mol), [*n*-Bu₄P]Cl (2,1 g; 7 mmol) und MeCl (64,0 g; 1,27 mol) befüllt. Der Autoklav wurde für 13 Stunden auf 150 °C erhitzt. Nach dem Abkühlen verblieben ca. 30 bar Druck auf dem Autoklav. Der Druck wurde durch Entspannen auf 10 bar reduziert und anschließend wurde der Autoklav nochmals für 13 Stunden auf 150 °C erhitzt. Nach dem Abkühlen verblieben ca. 15 bar Druck auf dem Autoklav. Der Autoklav wurde entspannt und der Gasraum mit Argon gespült. Die flüssige Produktmischung bestand zu 60 Gew.-% aus HSiMeCl₂, 14 Gew.-% aus MeSiCl₃, 10 Gew.-% aus H₂SiMeCl, 8 Gew.-% Me₂SiCl₂, 4 Gew.-% aus MeCl und 4 Gew.-% anderen Chlor-, Methyl- oder / und Methylen-substituierten Silanen. Das bei der Reaktion entstandene Gas konnte eindeutig mittels Massenspektrometrie als Wasserstoff identifiziert werden.

### Beispiel 2: Reaktionen von SiH₄ mit MeCl

Ein Autoklav wurde mit SiH₄ (9 g; 0,34 mol), [*n*-Bu₄P]Cl (2,2 g; 7 mmol) und MeCl (48,0 g; 0,95 mol) befüllt. Der Autoklav wurde für 13 Stunden auf 145 °C erhitzt. Nach dem Abkühlen verblieben ca. 25 bar Druck auf dem Autoklav. Der Autoklav wurde entspannt und der Gasraum mit Argon gespült. Die flüssige Produktmischung bestand zu 89 Gew.-% aus MeSiCl₃, 9 Gew.-% MeCl und 2 Gew.-% Me₂SiCl₂, außerdem waren geringe Mengen HSiMeCl₂ nachweisbar. Das bei der Reaktion entstandene Gas konnte eindeutig mittels Massenspektrometrie als Wasserstoff identifiziert werden.

### Beispiel 3: Reaktionen von SiH₄ mit MeCl

Ein Autoklav wurde mit SiH₄ (7 g; 0,34 mol), [Ph₄P]Cl (2,1 g; 6 mmol) und MeCl (25,0 g; 0,50 mol) befüllt. Der Autoklav wurde für 13 Stunden auf 300 °C erhitzt. Nach dem Abkühlen verblieben ca. 25 bar Druck auf dem Autoklav. Der Autoklav wurde entspannt und der Gasraum mit Argon gespült. Die flüssige Produktmischung bestand zu 56 Gew.-% aus MeSiCl₃, 2 Gew.-% MeCl und 42 Gew.-% Me₂SiCl₂, außerdem waren geringe Mengen HSiMeCl₂ nachweisbar. Das bei der Reaktion entstandene Gas konnte eindeutig mittels Massenspektrometrie als Wasserstoff identifiziert werden.

### Beispiel 4: Reaktionen von einer Mischung aus SiH₄ und SiCl₄ mit MeCl

Ein Autoklav wurde mit SiH₄ (9 g; 0,34 mol), [*n*-Bu₄P]Cl (2,2 g; 0,7 mmol), MeCl (70,0 g; 1,38 mol) und SiCl₄ (50,0 g; 0,29 mol) befüllt. Der Autoklav wurde für 13 Stunden auf 190 °C erhitzt. Nach dem Abkühlen verblieben ca. 50 bar Druck auf dem Autoklav. Der Autoklav wurde entspannt und der Gasraum mit Argon gespült. Die flüssige Produktmischung bestand zu 48 Gew.-% aus SiCl₄, 47 Gew.-% aus MeSiCl₃, 3 Gew.-% MeCl und 2 Gew.-% Me₂SiCl₂, außerdem waren geringe Mengen HSiMeCl₂ und SiCl₄ nachweisbar. Das bei der Reaktion entstandene Gas konnte eindeutig mittels Massenspektrometrie als Wasserstoff identifiziert werden.

### Beispiel 5: Reaktionen von HSiCl₂Me mit MeCl

Ein Autoklav wurde mit HSiCl₂Me (85 g; 0,75 mol), [*n*-Bu₄P]Cl (2,1 g; 7 mmol) und MeCl (50,0 g; 0,99 mol) befüllt. Der Autoklav wurde für 13 Stunden auf 130 °C erhitzt. Nach dem Abkühlen verblieben ca. 5 bar Druck auf dem Autoklav. Der Autoklav wurde entspannt und der Gasraum mit Argon gespült. Die flüssige Produktmischung bestand zu 56 Gew.-% aus HSiCl₂Me, 31 Gew.-% aus MeSiCl₃, 7 Gew.-% aus Me₂SiCl₂, 5 Gew.-% MeCl und 1 Gew.-% anderen Chlor-, Methyl- oder / und Methylen-substituierten Silanen. Das bei der Reaktion entstandene Gas konnte eindeutig mittels Massenspektrometrie als Wasserstoff identifiziert werden.

### Beispiel 6: Reaktionen von HSiCl₂Me mit MeCl

Ein Autoklav wurde mit HSiCl₂Me (85 g; 0,75 mol), [*n*-Bu₄P]Cl (2,5 g; 8 mmol) und MeCl (51,0 g; 1,01 mol) befüllt. Der Autoklav wurde für 13 Stunden auf 176 °C erhitzt. Nach dem Abkühlen verblieben ca. 20 bar Druck auf dem Autoklav. Der Autoklav wurde entspannt und der Gasraum mit Argon gespült. Die flüssige Produktmischung bestand zu 16 Gew.-% aus HSiCl₂Me, 41 Gew.-% aus MeSiCl₃, 33 Gew.-% aus Me₂SiCl₂, 9 Gew.-% MeCl und 1 Gew.-% anderen Chlor-, Methyl- oder / und Methylen-substituierten Silanen. Das bei der Reaktion entstandene Gas konnte eindeutig mittels Massenspektrometrie als Wasserstoff identifiziert werden.

### Beispiel 7: Reaktionen von HSiClMe₂ mit MeCl

Ein Autoklav wurde mit HSiCl₂Me (85 g; 0,75 mol), [*n*-Bu₄P]Cl (2,5 g; 8 mmol) und MeCl (48,0 g; 0,95 mol) befüllt. Der Autoklav wurde für 13 Stunden auf 176 °C erhitzt. Nach dem Abkühlen verblieben ca. 30 bar Druck auf dem Autoklav. Der Autoklav wurde entspannt und der Gasraum mit Argon gespült. Die flüssige Produktmischung bestand zu 16 Gew.-% aus HSiClMe₂, 67 Gew.-% aus Me₂SiCl₂, 7 Gew.-% aus Me₃SiCl, 9 Gew.-% MeCl und 1 Gew.-% anderen Chlor-, Methyl- oder / und Methylen-substituierten Silanen. Das bei der Reaktion entstandene Gas konnte eindeutig mittels Massenspektrometrie als Wasserstoff identifiziert werden.

## Patentansprüche

1. Verfahren zur Dehydrierung und Methylierung von Silanen, wobei Methylchlorid mit einem Silan ausgewählt aus der Gruppe bestehend aus SiH₄, H₂SiMe₂, H₂SiMeCl, H₃SiMe, H₃SiCl und HSiMe₂Cl, in Gegenwart mindestens eines Ammonium- und/oder Phosphoniumsalzes bei einer Temperatur im Bereich von 70 - 350 °C umgesetzt wird.

2. Verfahren nach Anspruch 1, wobei die Temperatur in einem Bereich von 100 - 350 °C liegt.

3. Verfahren nach Anspruch 1 oder 2, wobei das molare Verhältnis von Silan zu Methylchlorid in einem Bereich von 1 : 1 bis 1 : 10 liegt.

4. Verfahren nach einem der Ansprüche 1-3, wobei das molare Verhältnis von Katalysator zu Silan in einem Bereich von 0,01 : 1 bis 0,2 : 1 liegt.

5. Verfahren nach einem der Ansprüche 1-4, wobei das Phosphoniumsalz ausgewählt ist aus der Gruppe bestehend aus quartären Ammoniumhalogeniden [R₄N]X, quartären Phosphoniumhalogeniden [R₄P]X und tertiären Ammoniumhalogeniden [R₃NH]X, wobei jeweils gilt:
X = Cl, Br oder I, und R = unabhängig voneinander ausgewählt aus der Gruppe bestehend aus (i) C₁-C₁₂-Alkylgruppe, (ii) mit C₁-C₆-Alkyl substituierte C₆-C₁₄-Arylgruppe, und (iii) Phenylgruppe.

6. Verfahren nach Anspruch 5, wobei das Ammonium- und/oder Phosphoniumsalz ausgewählt ist aus der Gruppe bestehend aus [*n*-Bu₄N]Cl, [Et₄N]Cl, [Ph₄P]Cl und [*n*-Bu₄P]Cl.

7. Verfahren nach einem der Ansprüche 1-6, wobei das Verfahren kontinuierlich oder diskontinuierlich betrieben wird.

## Claims

1. Process for dehydrogenating and methylating silanes, wherein methyl chloride is reacted with a silane selected from the group consisting of SiH₄, H₂SiMe₂, H₂SiMeCl, H₃SiMe, H₃SiCl and HSiMe₂Cl, in the presence of at least one ammonium and/or phosphonium salt at a temperature in the range of 70-350°C.

2. Process according to Claim 1, wherein the temperature is in a range of 100-350°C.

3. Process according to Claim 1 or 2, wherein the molar ratio of silane to methyl chloride is in a range of 1:1 to 1:10.

4. Process according to any of Claims 1-3, wherein the molar ratio of catalyst to silane is in a range of 0.01:1 to 0.2:1.

5. Process according to any of Claims 1-4, wherein the phosphonium salt is selected from the group consisting of quaternary ammonium halides [R₄N]X, quaternary phosphonium halides [R₄P]X and tertiary ammonium halides [R₃NH]X, wherein in each case:
X = Cl, Br or I, and R = independently selected from the group consisting of (i) C₁-C₁₂-alkyl group, (ii) C₆-C₁₄-aryl group substituted by C₁-C₆-alkyl, and (iii) phenyl group.

6. Process according to Claim 5, wherein the ammonium and/or phosphonium salt is selected from the group consisting of [*n*-Bu₄N]Cl, [Et₄N]Cl, [Ph₄P]Cl and [n-Bu₄P]Cl.

7. Process according to any of Claims 1-6, wherein the process is conducted continuously or batchwise.

## Revendications

1. Procédé de déshydrogénation et de méthylation de silanes, dans lequel on fait réagir du chlorure de méthyle avec un silane choisi dans le groupe consistant en SiH₄, H₂SiMe₂, H₂SiMeCl, H₃SiMe, H₃SiCl et HSiMe₂Cl, en présence d'au moins un sel d'ammonium et/ou de phosphonium à une température dans la plage de 70 à 350 °C.

2. Procédé selon la revendication 1, dans lequel la température est comprise dans la plage de 100 à 350 °C.

3. Procédé selon la revendication 1 ou 2, dans lequel le rapport en moles du silane au chlorure de méthyle est compris dans la plage de 1:1 à 1:10.

4. Procédé selon l'une des revendications 1 à 3, dans lequel le rapport en moles du catalyseur au silane est compris dans la plage de 0,01:1 à 0,2:1.

5. Procédé selon l'une des revendications 1 à 4, dans lequel le sel de phosphonium est choisi dans le groupe consistant en les halogénures d'ammonium quaternaire [R₄N]X, les halogénures de phosphonium quaternaire [R₄P]X et les halogénures d'ammonium tertiaire [R₃NH]X, avec dans chaque cas X = Cl, Br ou I, et R étant, indépendamment les uns des autres, choisi dans le groupe consistant en (i) un groupe alkyle en C₁-C₁₂, (ii) un groupe aryle en C₆-C₁₄ à substitution alkyle en Ci-Ce, et (iii) le groupe phényle.

6. Procédé selon la revendication 5, dans lequel le sel d'ammonium et/ou de phosphonium est choisi dans le groupe consistant en [*n*-Bu₄N]Cl, [Et₄N]Cl, [Ph₄P]Cl et [n-Bu₄P]Cl.

7. Procédé selon l'une des revendications 1 à 6, le procédé étant exploité en continu ou en discontinu.
